# EUROPÄISCHE PATENTSCHRIFT

(11) **EP 3 712 496 B1**
(45) Veröffentlichungstag und Bekanntmachung des Hinweises auf die Patenterteilung: **19.01.2022**
(21) Anmeldenummer: 19163641.4
(22) Anmeldetag: 19.03.2019
(51) Int. Cl.: F21V 33/00, F16B 2/10, F16B 2/18, F21V 21/088, H02B 1/30, H02B 1/32, H02B 1/42, F21W 131/40

(54) **SCHALTSCHRANKLEUCHTE MIT GERÄTEBASIS ZUR BEFESTIGUNG AUF EINEN GERÄTETRÄGER EINES SCHALTSCHRANKES**
SWITCHING CABINET LIGHT WITH DEVICE BASE FOR ATTACHMENT TO A DEVICE CARRIER OF A SWITCHING CABINET
LAMPE POUR ARMOIRE DE COMMANDE AVEC BASE D'APPAREIL DESTINÉE À LA FIXATION À UN SUPPORT D'APPAREIL D'UNE ARMOIRE DE COMMANDE

(43) Veröffentlichungstag der Anmeldung: 23.09.2020
(73) Patentinhaber: Brenic Engineering GmbH, 35236 Breidenbach (DE)
(72) Erfinder: Schinke, Thomas, 57334 Bad Laasphe (DE)
(74) Vertreter: advotec.

(56) Entgegenhaltungen:
- WO-A1-2017/178010
- DE-A1-102006 029 826
- DE-A1-102014 013 658
- US-A1- 2010 239 383
- US-A1- 2010 299 890
- US-A1- 2018 283 670

## Beschreibung

Die vorliegende Erfindung betrifft eine Schaltschrankleuchte mit Gerätebasis zur Befestigung auf einem Geräteträger eines Schaltschrankes, wobei die Gerätebasis zumindest zwei Befestigungseinrichtungen mit jeweils einem an einer Auflagerseite der Gerätebasis angeordneten Befestigungsmittel zur Verbindung mit in einer Befestigungsebene des Geräteträgers angeordneten Haltemitteln aufweist, wobei zumindest eine Befestigungseinrichtung zur Veränderung eines zwischen den Befestigungsmitteln ausgebildeten Befestigungsabstands von einer Freigabeposition in eine Verriegelungsfunktion überführbar ist.

Zur Installation von elektrischen Geräten, insbesondere Schaltschrankleuchten, sind Schaltschränke standardgemäß mit als Profilschienen ausgebildeten Geräteträgern versehen, die zur Verbindung mit einer etwa an Schaltschrankleuchten ausgebildeten Gerätebasis ein Lochraster mit Befestigungslöchern aufweisen, die in einem definierten Lochabstand angeordnet sind. Bei der Verbindung einer Gerätebasis mit einem Geräteträger dienen die Lochränder als Haltemittel für die an der Gerätebasis ausgebildeten Befestigungsmittel, derart, dass die Befestigungsmittel in die Befestigungslöcher eingreifen und die Lochränder hintergreifen.

Aus der DE 10 2014 013 658 A1 ist ein Montagesystem zur Befestigung einer Schaltschrankleuchte in einem Schaltschrank bekannt, bei dem zwei an einer Auflagerseite der Gerätebasis angeordnete Befestigungsmittel in ihrem Abstand voneinander dadurch veränderbar sind, dass ein in Längsrichtung des Montagesystems bzw. des Geräteträgers in einem an der Auflagerseite ausgebildeten Schienensystem längsverschiebbar angeordnetes Befestigungsmittel entgegen der Wirkung einer Feder aus einer Verriegelungsposition in eine Freigabeposition bewegbar ist, in der die mit dem Montagesystem versehene Schaltschrankleuchte auf dem Geräteträger platziert werden kann. Die Überführung des Befestigungsmittels in die Verriegelungsposition erfolgt aufgrund der Federwirkung, sodass die Klemmkraft, mit der die Schaltschrankleuchte am Geräteträger gehalten wird, durch die Größe der Federkraft bestimmt wird. Da die Montage, also das Einsetzen der mit dem bekannten Montagesystem versehenen Schaltschrankleuchte in den Schaltschrank, zunächst die Überführung des Befestigungsmittels in die Freigabeposition erfordert, entspricht die dabei aufzubringende Montagekraft der im Verriegelungszustand die Schaltschrankleuchte in ihrer Position am Geräteträger sichernden Klemmkraft, sodass bei der Auslegung der Federkraft darauf zu achten ist, dass die erforderliche Montagekraft nicht zu hoch wird und somit die mögliche Klemmkraft bei dem bekannten Montagesystem durch die zulässige Montagekraft begrenzt ist.

Der vorliegenden Erfindung liegt die Aufgabe zugrunde, eine Befestigung einer Schaltschrankleuchte in einem Schaltschrank mit einer die Befestigung der Schaltschrankleuchte am Geräteträger des Schaltschrankes sichernden Klemmkraft zu ermöglichen, die nicht durch die Höhe der Montagekraft begrenzt wird.

Zur Lösung dieser Aufgabe weist die erfindungsgemäße Schaltschrankleuchte die Merkmale des Anspruchs 1 auf.

Erfindungsgemäß weist zumindest eine Befestigungseinrichtung der Gerätebasis einen an der Gerätebasis in einem ersten Schwenklager um eine parallel zur Auflagerseite der Gerätebasis ausgebildete erste Schwenkachse schwenkbar gelagerten Befestigungshebel auf, mit einem aus der Auflagerseite herausragenden als Befestigungsmittel ausgebildeten ersten Hebelende und einen in einem zweiten Schwenklager um eine zur ersten Schwenkachse parallele zweite Schwenkachse schwenkbar gelagerten, als Exzenterhebel ausgebildeten Betätigungshebel auf, der mit einem Exzenterfortsatz auf den Befestigungshebel wirkt, derart, dass eine auf den Befestigungshebel gerichtete Zustellbewegung des Exzenterfortsatzes in Folge einer Schwenkbewegung des Betätigungshebels eine Schwenkbewegung des Befestigungshebels bewirkt und der Befestigungsabstand der Befestigungsmittel verringert wird.

Die erfindungsgemäße Ausgestaltung der Gerätebasis ermöglicht aufgrund der Kombination des Befestigungshebels mit dem Betätigungshebel die Ausbildung einer Getriebeanordnung, welche im Vergleich zu der Montagekraft, die notwendig ist, um den Betätigungshebel von der Freigabeposition in die Verriegelungsposition zu überführen, eine wesentlich größere Klemmkraft erzeugt, mit der die Gerätebasis bzw. ein auf der Gerätebasis angeordnetes elektrisches Gerät in der Verriegelungsposition am Geräteträger des Schaltschrankes gehalten wird. Dabei ist zur Erzeugung der Klemmkraft keine Federeinrichtung notwendig, vielmehr erfolgt die Überführung des Befestigungshebels in die Verriegelungsposition alleine durch die vom Exzenterfortsatz des Betätigungshebels auf den Befestigungshebel wirkende Hebelkraft.

Vorzugsweise ist der Befestigungshebel als zweiarmiger Hebel (Wippe) ausgebildet, der sich zur Ausbildung des ersten Schwenklagers mit einer Hebelbasis an der ersten Schwenkachse abstützt, mit dem als Befestigungsmittel ausgeführten Hebelende in einer an der Auflagerseite ausgebildeten ersten Hebelaufnahme und mit einem dem ersten Hebelende gegenüber liegenden zweiten Hebelende in einer zweiten Hebelaufnahme der Gerätebasis gehalten wird. Somit ist der Befestigungshebel in einer Art schwimmenden Lagerung in der Gerätebasis aufgenommen, sodass der Befestigungshebel in besonders einfacher Weise, etwa als Blechstreifen ausgebildet sein kann, der zur Montage einfach derart in die Gerätebasis eingelegt werden kann, dass sich die vorstehend erläuterte bevorzugte Anordnung des Befestigungshebels in der Gerätebasis ergibt.

Wenn sich die erste Schwenkachse in einem größeren Abstand von der Auflagerseite und einer Seitenwand der Gerätebasis befindet als die zweite Schwenkachse, kann die Schwenkachse des Betätigungshebels in oder zumindest dicht benachbart der Seitenwand der Gerätebasis angeordnet werden.

Vorzugsweise ist der Betätigungshebel derart ausgebildet, dass der Betätigungshebel in der Freigabeposition aus der Seitenwand der Gerätebasis herausragt und in der Verriegelungsposition vorzugsweise im Wesentlichen bündig in der Seitenfläche angeordnet ist, sodass der Gebrauch des Betätigungshebels zur Überführung des Befestigungsmittel von der Freigabeposition in die Verriegelungsposition bei einer Montage der Gerätebasis, bei der die Gerätebasis an den Längsenden gehalten wird im Zuge der für die Montage auszuführende Bewegung erfolgen kann und damit in besonders komfortabler Art und Weise.

Vorzugsweise weist die Befestigungseinrichtung eine Vorspanneinrichtung zur Ausbildung einer zwischen dem Befestigungshebel und dem Exzenterfortsatz des Betätigungshebels wirkenden Kontaktkraft auf, sodass bei einer Entfernung der Gerätebasis vom Geräteträger des Schaltschrankes eine Rückstellung des Betätigungshebels von der Verriegelungsposition in die Freigabeposition durch die Vorspanneinrichtung unterstützt wird.

Vorzugsweise ist die Vorspanneinrichtung als eine Federeinrichtung ausgebildet, die in besonders bevorzugter Art und Weise als Schenkelfeder ausgebildet ist, die auf einer zur ersten Schwenkachse parallelen Achse gelagert ist.

Nachfolgend wird eine bevorzugte Ausführungsform der Erfindung anhand der Zeichnung näher erläutert.

Es zeigen:
- **Fig. 1**: Eine Schaltschrankleuchte mit einer als Gerätegehäuse ausgebildeten Gerätebasis mit einer in Freigabeposition angeordneten Befestigungseinrichtung vor Anordnung auf einem Geräteträger;
- **Fig. 2**: die in **Fig. 1** dargestellte Schaltschrankleuchte nach Überführung der Befestigungseinrichtungen in den Geräteträger und vor Überführung der rechten Befestigungseinrichtung in die Verriegelungsposition;
- **Fig. 3**: eine Einzeldarstellung der rechten Befestigungseinrichtung in Freigabeposition;
- **Fig. 4**: die in **Fig. 3** dargestellte Befestigungseinrichtung in Verriegelungsposition.

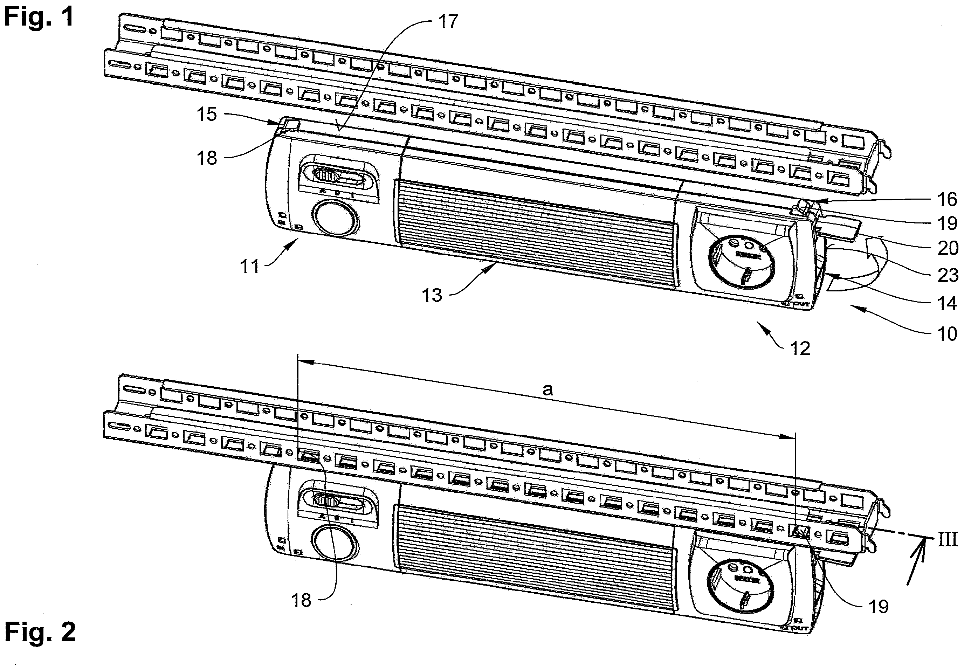

**Fig. 1** zeigt eine Schaltschrankleuchte 10, die im vorliegenden Fall ergänzende Gerätemodule 11, 12 aufweist, die als Bewegungsmeldermodul und Steckdosenmodul ausgebildet sind. Die Schaltschrankleuchte 10 weist ein Gerätegehäuse 13 auf, dessen Gehäuseunterteil eine Gerätebasis 14 ausbildet, die mit zwei Befestigungseinrichtungen 15, 16 versehen sind, welche sich jeweils an einem Längsende des Gerätegehäuses 13 befinden.

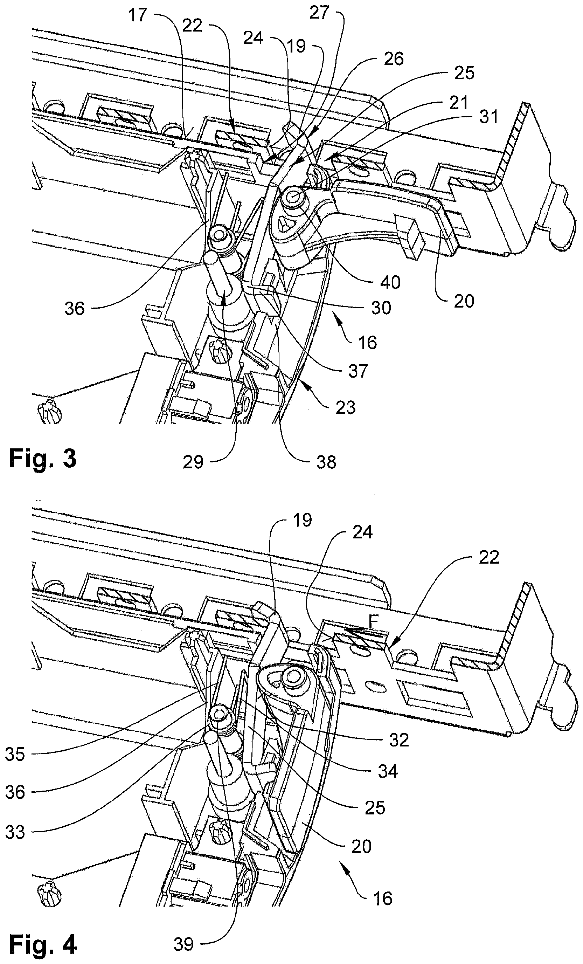

Die Befestigungseinrichtungen 15, 16 sind unterschiedlich ausgebildet, derart, dass die in den **Fig. 1** und **Fig. 2** jeweils linke Befestigungseinrichtung 15 als in ihrer Relativanordnung zur Gerätebasis 14 unveränderbare Befestigungseinrichtung 15 ausgebildet ist, mit einem aus einer Auflagerseite 17 der Gerätebasis 14 herausragenden, hier hakenförmig ausgebildeten ersten Befestigungsmittel 18. Die im vorliegenden Fall rechte Befestigungseinrichtung 16 ist als in ihrer Relativposition gegenüber der Gerätebasis 14 veränderbare Befestigungseinrichtung 16 ausgebildet mit einem ebenfalls hakenförmig ausgebildeten zweiten Befestigungsmittel 19, das aus der Auflagerseite 17 herausgeführt ist und mittels eines an einer Seitenwand 23 der Gerätebasis 14 angeordneten Betätigungshebels 20 in eine Verriegelungsposition **(****Fig. 4****)** überführbar ist, in der die Schaltschrankleuchte 10 nach vorherigem Einführen der Befestigungsmittel 18, 19 in Befestigungslöcher 21 eines Geräteträgers 22 geklemmt gehalten wird.

**Fig. 2** zeigt die Schaltschrankleuchte 10 in der Montagekonfiguration, in der die Befestigungsmittel 18, 19 bei Positionierung der Auflagerseite 17 der Gerätebasis 14 gegen den Geräteträger 22 in die Befestigungslöcher 21 des Geräteträgers 22 eingreifen. Wie **Fig. 3** in einer Teildarstellung des rechten Teil des die Gerätebasis 14 ausbildenden Gehäuseunterteils zeigt, befindet sich der Betätigungshebel 20 hierbei in der Freigabeposition in einer aus der Seitenwand 23 der Gerätebasis 14 ausgeschwenkten Stellung, derart, dass zwischen dem Befestigungsmittel 19 und einem als Haltemittel 24 dienenden Lochrand des Befestigungslochs 21 kein Kraftschluss ausgebildet ist.

Wie ferner **Fig. 3** zeigt, wird das Befestigungsmittel 19 von einem hier hakenförmig ausgebildeten ersten Hebelende 26 eines Befestigungshebels 25 gebildet, wobei das Hebelende 26 in einer an der Auflagerseite 17 ausgebildeten ersten Hebelaufnahme 27 angeordnet ist und ein dem Hebelende 26 gegenüberliegendes zweites Hebelende 37 des Befestigungshebels 25 in einer zweiten Hebelaufnahme 38 angeordnet ist, die in der Seitenwand 23 der Gerätebasis 14 ausgebildet ist. Zusammen mit einer sich an einer hier als Gehäusezapfen ausgebildeten ersten Schwenkachse 28 der Befestigungseinrichtung 16 abstützenden Hebelbasis 30 bilden die Hebelaufnahmen 27 und 38 ein erstes Schwenklager 29 der Befestigungseinrichtung 16. Dabei ermöglichen die Hebelaufnahmen 27 und 38 im Zusammenwirken mit den Hebelenden 26 und 37 eine schwimmende Anordnung der Hebelbasis 30 auf der ersten Schwenkachse 28, sodass der Befestigungshebel 25 als einfacher Blechstreifen ausgebildet sein kann.

Zur Überführung des Befestigungshebels 25 aus der in **Fig. 3** dargestellten Freigabeposition, in der das am Hebelende 26 ausgebildete Befestigungsmittel 19 in das Befestigungsloch 21 ein- und ausgeführt werden kann, wird der Befestigungshebel 25 mittels einer auf den Befestigungshebel 25 gerichteten Schwenkbewegung des Betätigungshebels 20 in seine in **Fig. 4** dargestellte Verriegelungsposition überführt. Hierzu weist der um eine zur ersten Schwenkachse 28 parallele zweite Schwenkachse 31 in einem Schwenklager 40 schwenkbar gelagerte, als Exzenterhebel ausgebildete Betätigungshebel 20 einen Exzenterfortsatz 32 auf, der bei der Schwenkbewegung eine auf den Befestigungshebel 25 gerichtete Zustellbewegung ausführt, sodass, wie in **Fig. 4** dargestellt, der Befestigungshebel 25 in seine Verriegelungsposition überführt wird. Dabei verringert sich ein zwischen den Befestigungsmitteln 18, 19 in Freigabeposition ausgebildeter Befestigungsabstand a **(****Fig. 2****),** sodass zwischen dem Haltemittel 24 des Geräteträgers 22 und dem Befestigungsmittel 19 eine Klemmkraft F wirksam wird, derart, dass die Gerätebasis 14 nicht nur durch einen zwischen den hakenförmig ausgebildeten Befestigungsmitteln 18, 19 und den hintergriffenen, die Haltemittel 24 ausbildenden Lochrändern der Befestigungslöcher 21 ausgebildeten Formschluss, sondern darüber hinaus auch durch einen zwischen den Befestigungsmitteln 18, 19 und den Haltemitteln 24 gebildeten Kraftschluss gehalten wird.

Wie aus **Fig. 4** deutlich wird, ist der Exzenterfortsatz 32 des Betätigungshebels 20 derart ausgebildet sowie die Relativanordnung der ersten Schwenkachse 29 des Befestigungshebels 25 zur zweiten Schwenkachse 32 des Betätigungshebels 20 so gewählt, dass sich in der Verriegelungsposition des Betätigungshebels 20 eine Selbsthemmung des aus dem Betätigungshebel 20 und dem Befestigungshebel 25 gebildeten Hebelgetriebes einstellt und ein Lösen der Klemmung nur dadurch möglich ist, dass der Betätigungshebel 20 manuell aus der in **Fig. 4** dargestellten Verriegelungsposition in die Freigabeposition **(****Fig. 3****)** geschwenkt wird, wobei zur Unterstützung der damit verbundenen rückstellenden Bewegung des Befestigungshebels 25 eine auf einer zur ersten Schwenkachse 28 sowie zweiten Schwenkachse 31 parallelen dritten Achse 39 gelagerte Schenkelfeder 33 vorgesehen ist. Die Schenkelfeder 33 stützt sich mit einem Federschenkel 34 an dem Befestigungshebel 25 und mit einem gegenüberliegenden Federschenkel 35 an einen in der Gerätebasis 14 ausgebildeten Stützsteg 36 ab, der im vorliegenden Fall gleichzeitig eine Gehäusezwischenwand ausbildet.

## Patentansprüche

1. Schaltschrankleuchte (10), mit einer Gerätebasis (14) zur Befestigung auf einem Geräteträger (22) eines Schaltschranks, wobei die Gerätebasis (14) zumindest zwei Befestigungseinrichtungen (15, 16) mit jeweils einem an einer Auflagerseite (17) der Gerätebasis (14) angeordneten Befestigungsmittel (18, 19) zur Verbindung mit in einer Befestigungsebene des Geräteträgers (22) angeordneten Haltemitteln (24) aufweist, wobei zumindest eine Befestigungseinrichtung (16) zur Veränderung eines zwischen den Befestigungsmitteln (18, 19) ausgebildeten Befestigungsabstands a von einer Freigabeposition in eine Verriegelungsposition überführbar ist,
**dadurch gekennzeichnet,**
**dass** die Befestigungseinrichtung (16) einen an der Gerätebasis (14) in einem ersten Schwenklager (29) um eine parallel zur Auflagerseite (17) der Gehäusebasis (14) ausgebildete erste Schwenkachse (28) schwenkbar gelagerten Befestigungshebel (25) aufweist, mit einem aus der Auflagerseite (17) herausragenden als Befestigungsmittel (19) ausgebildeten ersten Hebelende (26) und einen in einem zweiten Schwenklager (40) um eine zur ersten Schwenkachse (28) parallele zweite Schwenkachse (31) schwenkbar gelagerten, als Exzenterhebel ausgebildeten Betätigungshebel (20) aufweist, der mit einem Exzenterfortsatz (32) auf den Befestigungshebel (25) wirkt, derart, dass eine auf den Befestigungshebel (25) gerichtete Zustellbewegung des Exzenterfortsatzes (32) in Folge einer Schwenkbewegung des Betätigungshebels (20) eine Schwenkbewegung des Befestigungshebels (25) bewirkt und der Befestigungsabstand a der Befestigungsmittel (18, 19) verringert wird.

2. Schaltschrankleuchte (10)nach Anspruch 1,
**dadurch gekennzeichnet,**
**dass** der Befestigungshebel (25) als zweiarmiger Hebel (Wippe) ausgebildet ist, der sich zur Ausbildung des ersten Schwenklagers (29) mit einer Hebelbasis (30) an der ersten Schwenkachse (28) abstützt, mit dem als Befestigungsmittel (19) ausgeführten Hebelende (26) in einer an der Auflagerseite (17) ausgebildeten ersten Hebelaufnahme (27) und mit einem dem ersten Hebelende (26) gegenüberliegenden zweiten Hebelende (37) in einer zweiten Hebelaufnahme (38) der Gerätebasis (14) gehalten wird.

3. Schaltschrankleuchte (10)nach Anspruch 1 oder 2,
**dadurch gekennzeichnet,**
**dass** sich die erste Schwenkachse (28) in einem größeren Abstand von der Auflagerseite (17) und einer Seitenwand (23) der Gerätebasis (14) befindet als die zweite Schwenkachse (31).

4. Schaltschrankleuchte (10)nach Anspruch 3,
**dadurch gekennzeichnet,**
**dass** der Betätigungshebel (20) derart ausgebildet ist, dass der Betätigungshebel (20) in der Freigabeposition aus der Seitenwand (23) der Gerätebasis (14) herausragt und in der Verriegelungsposition im Wesentlichen bündig in der Seitenwand (23) angeordnet ist.

5. Schaltschrankleuchte (10)nach einem der vorangehenden Ansprüche, **dadurch gekennzeichnet,**
**dass** die Befestigungseinrichtung (16) eine Vorspanneinrichtung zur Ausbildung einer zwischen dem Befestigungshebel (25) und dem Exzenterfortsatz (32) des Betätigungshebels (20) wirkenden Kontaktkraft aufweist.

6. Schaltschrankleuchte (10)nach Anspruch 5,
**dadurch gekennzeichnet,**
**dass** die Vorspanneinrichtung als eine Federeinrichtung ausgebildet ist.

7. Schaltschrankleuchte (10)nach Anspruch 6,
**dadurch gekennzeichnet,**
**dass** die Federeinrichtung als Schenkelfeder (33) ausgebildet ist, die auf einer zur ersten Schwenkachse (28) parallelen Achse (39) gelagert ist.

## Claims

1. A switch cabinet light (10), having a device base (14) for being fastened on a device carrier (22) of a switch cabinet, the device base (14) having at least two fastening units (15, 16) each of which has a fastener (18, 19) which is disposed at a support side (17) of the device base (14), for being connected to retainers (24) disposed in a fastening plane of the device carrier (22), at least one fastening unit (16) being transferable from a release position to a locking position in order to change a fastening distance a formed between the fasteners (18, 19),
**characterized in that**
the fastening unit (16) has a fastening lever (25) which is pivotably mounted at the device base (14) in a first pivot bearing (29) about a first pivot axis (28) formed parallel to the support side (17) of the device base (14), said fastening lever (25) having a first lever end (26) projecting from the support side (17) and being formed as a fastener (19), and **in that** the fastening unit (16) has an actuating lever (20) which is pivotably mounted in a second pivot bearing (40) about a second pivot axis (31) parallel to the first pivot axis (28) and which is realized as an eccentric lever, said actuating lever (20) acting on the fastening lever (25) with an eccentric extension (32) in such a manner that a forward motion of the eccentric extension (32) directed toward the fastening lever (25) causes, as a result of a pivoting movement of the actuating lever (20), a pivoting movement of the fastening lever (25) and that the fastening distance a of the fasteners (18, 19) is reduced.

2. The switch cabinet light (10) according to claim 1, **characterized in that**
the fastening lever (25) is realized as a two-armed lever (rocker) which rests on the first pivot axis (28) with a lever base (30) to realize the first pivot bearing (29), and is retained with the lever end (26) designed as a fastener (19) in a first lever reception (27) formed at the support side (17) and with a second lever end (37) opposite the first lever end (26) in a second lever reception (38) of the device base (14).

3. The switch cabinet light (10) according to claim 1 or 2, **characterized in that**
the first pivot axis (28) is located at a larger distance from the support side (17) and a lateral wall (23) of the device base (14) than the second pivot axis (31).

4. The switch cabinet light (10) according to claim 3,
**characterized in that**
the actuating lever (20) is realized in such a manner that the actuating lever (20), in the release position, projects from the lateral wall (23) and, in the lock position, is disposed essentially flush in the lateral wall (23).

5. The switch cabinet light (10) according to any one of the preceding claims,
**characterized in that**
the fastening unit (16) has a prestressing unit to form a contact force acting between the fastening lever (25) and the eccentric extension (32) of the actuating lever (20).

6. The switch cabinet light (10) according to claim 5, **characterized in that**
the prestressing unit is realized as a spring unit.

7. The switch cabinet light (10) according to claim 6,
**characterized in that**
the spring unit is realized as a leg spring (33) which is mounted on an axis (39) parallel to the first pivot axis (28).

## Revendications

1. Lampe (10) d'une armoire électrique, la lampe (10) ayant une base d'appareillage (14) pour la fixation sur un support d'appareillage (22) d'une armoire électrique, la base d'appareillage (14) ayant au moins deux unités de fixation (15, 16) dont chacune a un moyen de fixation (18, 19) qui est disposé sur un côté portant (17) de la base d'appareillage (14), pour être relié à des moyens de retenue (24) disposés dans un plan de fixation du support d'appareillage (22), au moins une unité de fixation (16) étant transférable d'une position de déverrouillage à une position de verrouillage pour changer une distance de fixation a formée entre les moyens de fixation (18, 19), **caractérisée en ce que**
l'unité de fixation (16) a un levier de fixation (25) qui est monté de manière pivotante sur la base d'appareillage (14) dans un premier palier de pivotement (29) autour d'un premier axe de pivotement (28) formé parallèlement au côté portant (17) de la base d'appareillage (14), ledit levier de fixation (25) ayant une première extrémité de levier (26) faisant saillie du côté portant (17) et étant formée comme moyen de fixation (19), et **en ce que** l'unité de fixation a un levier d'actionnement (20) qui est monté de manière pivotable dans un deuxième palier de pivotement (40) autour d'un deuxième axe de pivotement (31) parallèle au premier axe de pivotement (28) et qui est réalisé comme levier excentrique, ledit levier d'actionnement (20) agissant sur le levier de fixation (25) avec un prolongement d'excentrique (32) de manière qu'un déplacement en avant du prolongement d'excentrique (32) dirigé vers le levier de fixation (25) provoque, comme résultat d'un mouvement de pivotement du levier d'actionnement (20), un mouvement de pivotement du levier de fixation (25) et que la distance de fixation a des moyens de fixation (18, 19) est réduite.

2. Lampe (10) d'une armoire électrique selon la revendication 1, **caractérisée en ce que**
le levier de fixation (25) est formé comme levier à deux bras (bascule) qui s'appuie sur le premier axe de pivotement (29) avec une base de levier (30) pour réaliser le premier palier de pivotement (29), et est retenu avec l'extrémité de levier (26) conçue comme moyen de fixation (19) dans une première réception de levier (27) formée sur le côté portant (17) et avec une deuxième extrémité de levier (37) opposée à la première extrémité de levier (26) dans une deuxième réception de levier (38) de la base d'appareillage (14).

3. Lampe (10) d'une armoire électrique selon la revendication 1 ou 2, **caractérisée en ce que**
le premier axe de pivotement (28) est situé à une distance plus grande du côté portant (17) et d'une paroi latérale (23) de la base d'appareillage (14) que le deuxième axe de pivotement (31).

4. Lampe (10) d'une armoire électrique selon la revendication 3, **caractérisée en ce que**
le levier d'actionnement (20) est réalisé de manière que le levier d'actionnement (20) fait saillie de la paroi latérale (23) de la base d'appareillage (14) dans la position de déverrouillage et est disposé essentiellement à fleur dans la paroi latérale (23) dans la position de verrouillage.

5. Lampe (10) d'une armoire électrique selon l'une quelconque des revendications précédentes,
**caractérisée en ce que**
l'unité de fixation (16) a un moyen de précontrainte pour former une force de contact agissant entre le levier de fixation (25) et le prolongement d'excentrique (32) du levier d'actionnement (20).

6. Lampe (10) d'une armoire électrique selon la revendication 5, **caractérisée en ce que**
le moyen de précontrainte est réalisé comme moyen de ressort.

7. Lampe (10) d'une armoire électrique selon la revendication 6, **caractérisée en ce que**
le moyen de ressort est réalisé comme ressort à branches (33) qui est monté sur un axe (39) parallèle au premier axe de pivotement (28).
